# EUROPEAN PATENT APPLICATION

(11) **EP 4 546 537 A1**
(43) Date of publication of application: **30.04.2025**
(21) Application number: 23306849.3
(22) Date of filing: 23.10.2023
(51) Int. Cl.: H01M 50/342, H01M 50/15

(54) **ENERGY STORAGE CELL COMPRISING SUPPORTING MEMBER FOR THE VENTING MEMBRANE**

(71) Applicant: Automotive Cells Company SE, 33520 Bruges (FR)
(72) Inventor: CHOI, Hangjune, 33200 BORDEAUX (FR)
(74) Representative: Lavoix

(57) **Abstract**

The present invention concerns an energy storage cell comprising:
- a can defining a closed internal volume, and comprising a pass-through venting window (30) allowing the passage of gas from the closed internal volume, the pass-through venting window (30) being formed in a venting face (25) of the can,
- a stack of electrodes enclosed in the internal volume,
- a venting membrane (40) laid across the venting window (30), a free space being defined in the internal volume behind the venting membrane (40).

The energy storage cell comprises at least one supporting member (50, 51) in the free space, the or each supporting member (50, 51) being dedicated to limiting inwards deflections of the venting membrane (40) in the free space.

## Description

The present invention concerns an energy storage cell of the type comprising:
- a can defining a closed internal volume, and comprising a pass-through venting window allowing the passage of gas from the closed internal volume, the pass-through venting window being formed in a venting face of the can,
- a stack of electrodes enclosed in the closed internal volume,
- a venting membrane laid across the pass-through venting window, a free space being defined in the closed internal volume behind the venting membrane.

An energy storage cell is an assembly that enables electrical energy to be converted into chemical energy and then stored. It comprises a set of multiple electrode sheets stacked and immersed in an electrolyte.

In order to ensure the safety of the cell during operation, it is known to use a pressure-accommodating mean for avoiding cell explosion caused by abnormal increase in the internal pressure.

Indeed, the formation and/or expansion of gases produced during operation may increase the internal pressure of the cell. If the internal pressure reaches a critical point by any chance, it can cause the cell to explode. To avoid explosion of the cell, a slightly deformable and breakable leak-tight venting membrane is used across a venting window of the cell.

During the manufacturing process of the energy storage cell, a vacuum is created inside the cell in order to fill it with the electrolyte. This low pressure tends to deform the venting membrane by causing an inwards deflection of the membrane. If the deflection reaches a threshold value, the venting membrane cracks at the joined area of the membrane to the external layer of the cell and the whole cell has to be replaced.

One aim of the invention is to ensure the safety of the venting membrane during the manufacturing of the cell, especially in low internal pressure conditions.

To this aim, the energy storage cell comprises at least one supporting member in the free space, the or each supporting member being dedicated to limiting inwards deflections of the venting membrane in the free space.

As the supporting members are dedicated to limiting the inwards deflection of the venting membrane, the internal pressure inside the cell may be taken down with no risk of breakage at the joining area of the venting membrane to the venting face of the can.

In particular embodiments, the energy storage cell, according to the invention, comprises one or more of the following features, taken alone or in any technically possible combination:
- the or each supporting member comprises a rib extending in the free space along the venting membrane;
- the venting face comprises beams extending across the pass-through venting window parallel to a fixation plane of the venting membrane, the or each supporting member being linked to the ribs by pillars, the pillars extending in a plane angularly offset from the fixation plane of the venting membrane;
- the venting face comprises an external layer superimposed with an internal layer, the internal layer comprises the or each supporting members, the venting membrane being fixed to the external layer;
- the energy storage cell comprises at least two supporting members, which are angularly offset from each other;
- the or each supporting member is integral with at least one part of the venting face;
- the energy storage cell comprises at least two lateral supporting members, and at least one central supporting member extending between and along the lateral supporting members, the or each central supporting member being for at least a part of its surface, further away from the fixation plane of the venting membrane than the lateral supporting members;
- the part of the or each central supporting member's surface being further away from the fixation plane of the venting membrane than the lateral supporting members, is a central portion of the or each central supporting member;
- the or each supporting member is configured to allow gas passage from the closed internal volume of the cell to the venting membrane;
- the venting membrane is welded around the perimeter of the pass-through venting window, the venting membrane sealingly closing the pass-through venting window;
- the venting membrane is welded on an inner face of the can; and
- the venting membrane is, in a normal position, laid at least in part onto the or each supporting member.

The invention will be better understood by reading the following description, given solely by way of example, and made with reference to the appended drawings, in which:
- [Fig.1] Figure 1 is a perspective view of an energy storage cell,
- [Fig.2] Figure 2 is an exploded view of the energy storage cell of Figure 1,
- [Fig.3] Figure 3 is an exploded view of a venting face of the energy storage cell of Figure 1, and
- [Fig.4] Figure 4 is a cross-sectional partial view along plane IV-IV perpendicular to the venting face of the energy storage cell of Figure 1.

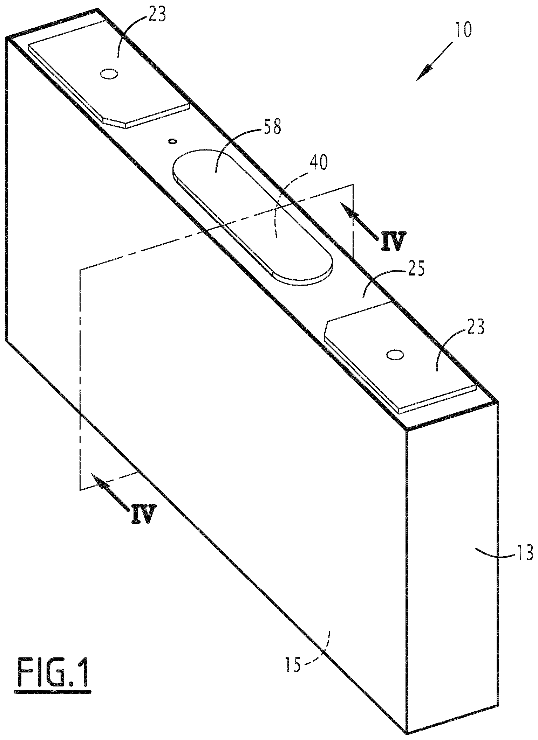

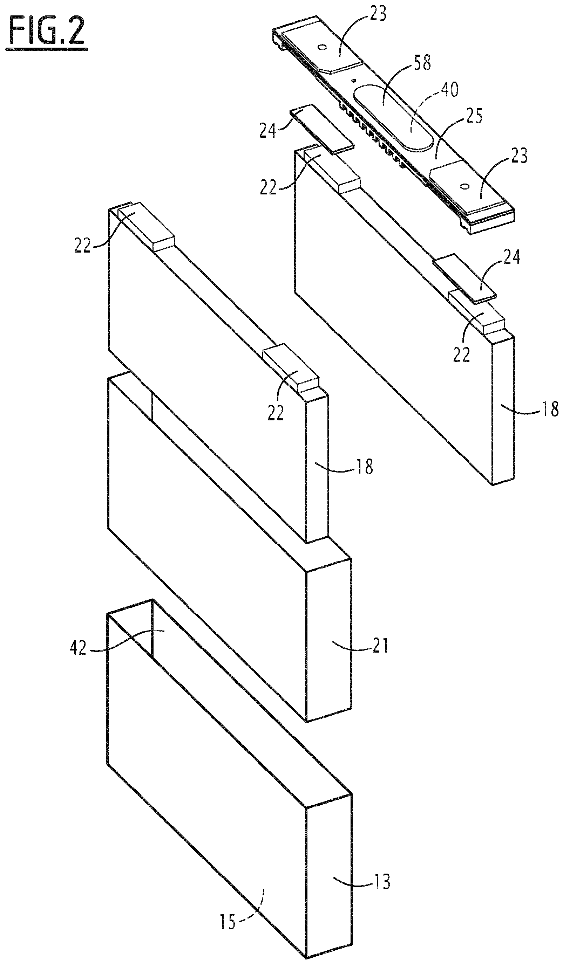

The energy storage cell 10 shown on Figures 1 and 2 comprises a can 13, defining a closed internal volume 15. The can 13 is, for example, a metallic parallelepipedal case.

In everything that follows, the terms "internal" and "inner" stand for what is turned towards the internal volume 15 of the cell 10, and the terms "external" and "outer" stand for what is turned towards the outside of the cell 10.

The energy storage cell 10 comprises two stacks of electrodes 18 enclosed in the closed internal volume 15.

Before operation of the energy storage cell 10, the can 13 is filled with an electrolyte in which the stacks of electrodes 18 are immersed.

As can be seen in Figure 2, the stacks of electrodes 18 are parallelepipedal in shape and are completely enclosed for electrical insulation by a protective envelope 21.

The energy storage cell 10 comprises connection tabs 22 connecting together the electrodes of the same polarity. The connection tabs 22 are electrically connected to respective outer connection terminals 23 through collectors 24.

The can 13 comprises a venting face 25 on which the terminals 23 are exposed. An oblong pass-through venting window 30 allowing the passage of gases from the closed internal volume 15 is defined in the venting face 25.

In the example illustrated in Figures 1 and 2, the venting face 25 is the top face of the can 13. However, the venting face 25 could also be a lateral face, or a bottom face of the can 13.

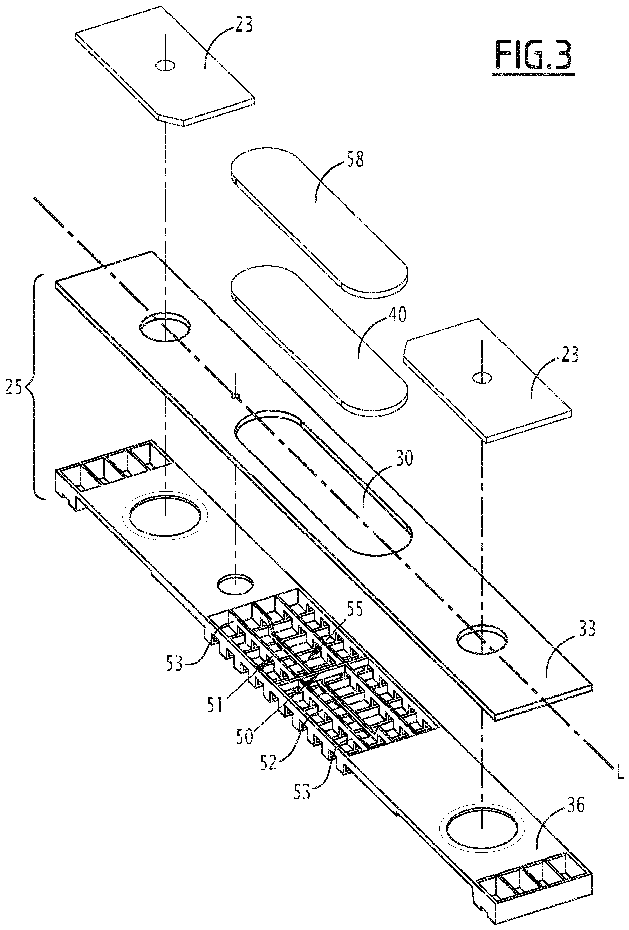

The venting face 25 comprises an external layer 33 superimposed with an internal layer 36, as shown in Figure 3.

In this configuration, the pass-through venting window 30 extends across both the external layer 33 and the internal layer 36.

The pass-through venting window 30 allows the passage of gases from the internal volume 15 of the can 13 towards the outside of the energy storage cell 10.

The energy storage cell 10 comprises a venting membrane 40 laid across the pass-through venting window 30, a free space 42, illustrated in Figure 2, being defined in the closed internal volume 15 behind the venting membrane 40.

The venting membrane 40 is leak-tight. For example, the venting membrane 40 is a sheet of aluminum, having a thickness comprised between 0.2 mm and 0.5 mm

The venting membrane 40 is welded around the perimeter of the pass-through venting window 30, and sealingly closes the pass-through venting window 30.

The venting membrane 40 is, for example, welded on the inner face of the can 13.

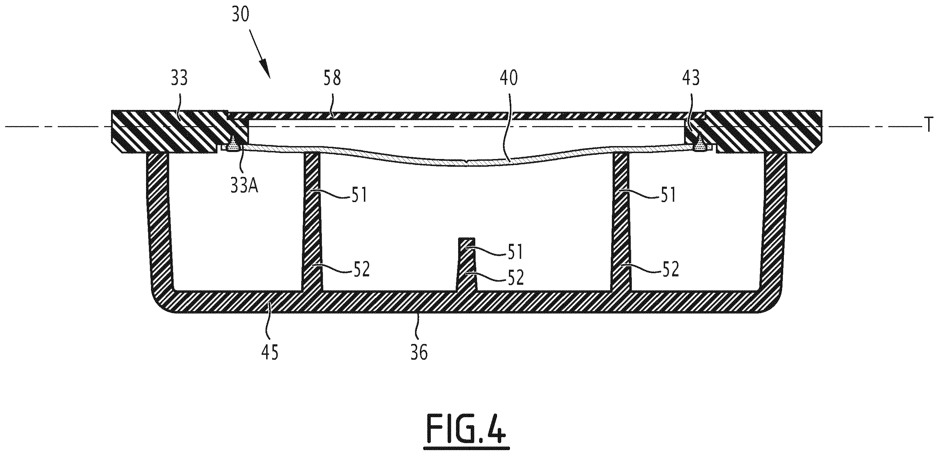

In the example illustrated in Figures 3 and 4, the venting membrane 40 is fixed to the external layer 33 of the venting face 25.

In particular, the venting membrane 40 is welded on an inner face 33A of the external layer 33 of the venting face 25.

The external layer 33 of the venting face 25 comprises a peripheral shoulder 43 with reduced thickness around the pass-through venting window 30. The peripheral shoulder 43 extends along the entire perimeter of the pass-through venting window 30.

The venting membrane 40 is welded on the inner side of the peripheral shoulder 43.

Therefore, a fixation plane of the venting membrane 40 onto the venting face 25 can be defined. The fixation plane is for example parallel to the venting face 25.

The venting membrane 40 is slightly deformable.

By "slightly deformable" it is meant that the venting membrane 40 is able to be deflected in a concave manner in the free space 42 towards the inside of the cell 10 in response to a low-pressure condition inside the cell 10 and/or a high-pressure condition outside the cell 10. Similarly, the venting membrane 40 is able to be deflected in a convex manner in the free space 42 towards the outside of the cell 10 in response to a high-pressure condition inside the cell 10 and/or a low-pressure condition outside the cell 10.

The venting membrane 40 is fixed on the inner side of the peripheral narrowing 43, therefore when an increase in pressure inside the cell 10 occurs, the forces applied to the venting membrane 40 are more evenly distributed along the inner side of the peripheral narrowing 43, and the concentration of forces in a local zone of the venting membrane 40 is avoided.

In order to support the venting membrane 40 during the inward deflection, the venting face 25 comprises a grid extending across the pass-through venting window 30, in the free space 42 behind the venting membrane 40.

The grid comprises a plurality of beams 45 and ribs 50, 51 for supporting the venting membrane 40. The beams 45 extend parallel to the fixation plane of the venting membrane 40, while the ribs 50, 51 extend in a plane angularly offset from the fixation plane of the venting membrane 40 and along the venting membrane 40.

By "along the venting membrane 40", it is meant that the ribs 50, 51 extend in the free space 42, facing the venting membrane 40, for example, in any direction along the venting membrane 40.

In other words, the beams 45 and the ribs 50, 51 are crossed so as to form a lattice. In particular, the grid is configured to allow gas passage from the closed internal volume 15 of the cell 10 to the venting membrane 40.

In other words, the beams 45 and the ribs 50, 51 do not close the pass-through venting window 30 but rather divide the pass-through venting window 30 into a plurality of pass-through sections for the gas passage.

The beams 45 and the ribs 50, 51 are comprised in the internal layer 36 of the venting face 25. More precisely, the beams 45 and the ribs 50, 51 are for example integral with the internal layer 36 of the venting face 25.

The beams 45 and the ribs 50, 51 are for example made in a plastic material, such as polypropylene.

In a more general way, the beams 45 and the ribs 50, 51 are made in an electrically insulating material and in a material resistant to the electrolyte.

The grid is for example plastic injection molded with the internal layer 36 of the venting face 25.

The ribs 50, 51 are linked to the beams 45 by a plurality of pillars 52 extending across the pass-through venting window 30.

In the illustrated example, the pillars 52 are integral with the ribs 50, 51.

In the example shown in Figure 3, the grid comprises beams 45 extending in a transverse direction T and aligned side by side along a longitudinal direction L, across the pass-through venting window 30.

The beams 45 extend from one peripheral side of the pass-through venting window 30 to the opposite peripheral side along the transverse direction T.

The transverse direction T is angularly offset with the longitudinal direction L, for example, the transverse direction T is perpendicular to the longitudinal direction L.

In the illustrated example, the grid comprises four ribs 50, 51, forming supporting members in the free space 42, and dedicated to limiting inward deflections of the venting membrane 40 in the free space 42.

The venting membrane 40 is, in a normal position, laid at least in part onto the ribs 50, 51.

In the example of Figure 3, the energy storage cell 10 comprises one transverse rib 50, extending in the transverse direction T, and three longitudinal ribs 51, extending in the longitudinal direction L. The longitudinal ribs 51 are aligned side by side along the transverse direction T.

The longitudinal ribs 51 are divided into two lateral longitudinal ribs extending near the periphery of the pass-through venting window 30, and one central longitudinal rib extending between the two lateral longitudinal ribs.

The central longitudinal rib 51 has a central portion 55, taken between the extremities 53, being further away from the fixation plane of the venting membrane 40 than the lateral longitudinal ribs 51, as it can be seen in Figure 4.

In the normal position of the venting membrane 40, the venting membrane 40 rests directly onto the lateral longitudinal ribs 51, while the venting membrane 40 rests only in part onto the central longitudinal rib 51.

In other words, the central longitudinal rib 51 is located at a variable distance from the fixation plane of the venting membrane 40 along its length.

In the example shown in Figure 3, the central longitudinal rib 51 has a variable height, taken perpendicularly to the fixation plane of the venting membrane 40 along its length. The extremities 53 are higher than the central portion 55.

The central longitudinal rib 51 has therefore at least two levels of height, a low level in the central portion 55 and a high level around the extremities 53.

Therefore, in the normal position of the venting membrane 40, the venting membrane 40 rests in contact with the extremities 53 of the central longitudinal rib 51, while the center of the venting membrane 40 is located at a distance from the central portion 55 of the central longitudinal rib 51.

This feature allows using as little material as possible in the region of gas passage to reduce the fluid dynamic resistance for the gases to flow through the venting window 30, while still supporting the venting membrane 40 effectively thanks to the high-level of height of the central longitudinal rib 51 around its extremities 53.

The low-pressure condition inside the cell 10 is for example induced during manufacturing of the cell 10, when a vacuum is established inside the cell 10 in order to replace ambient air with the electrolyte.

When the pressure becomes too low, as illustrated in Figure 4, the longitudinal ribs 51 act, over their whole length, as a support for the venting membrane 40 and avoid the venting membrane 40 to deflect too much. Therefore, a potential breakage of the venting membrane 40 at the welded region around the edge is avoided.

Preferably, the transverse rib 50 has the same height as the lateral longitudinal ribs 51 to ensure sufficient support of the venting membrane 40.

Advantageously, the venting membrane 40 is protected by a vent cover 58. The vent cover 58 is, for example, a thin plastic sheet with a small hole for air scavenge.

The energy storage cell 10 according to the invention has many advantages.

The ribs 50, 51 limit the inward deflection of the venting membrane 40 in response to a low internal pressure state. The configuration of the ribs 50, 51 is such that the venting membrane 40 can deform enough inwardly without worries of the changes in pressure inside the cell 10.

Therefore, during manufacturing of the cell 10, when the internal pressure is taken down, for example in an extreme case when the internal pressure goes down to 0 atm in absolute pressure, the venting membrane is supported by the ribs 50, 51, limiting its inward deflection. A vacuum can be established inside the cell in order to fill it with the electrolyte, with no damage made to the venting membrane 40.

The operation of the cell 10 can then be carried out safely.

### Reference list:

10: energy storage cell
13: can
15: closed internal volume
18: stack of electrodes
21: envelope
22: tab
23: terminal
24: collector
25: venting face
30: venting window
33: external layer
33A: inner face of the external layer
36: internal layer
40: venting membrane
42: free space
43: peripheral shoulder
45: beam
50, 51: rib
50: transversal rib
51: longitudinal rib
52: pillar
53: extremity of the central longitudinal rib
55: central portion
58: vent cover
L: longitudinal direction
T: transversal direction

## Claims

1. Energy storage cell (10) comprising:
- a can (13) defining a closed internal volume (15), and comprising a pass-through venting window (30) allowing the passage of gas from the closed internal volume (15), the pass-through venting window (30) being formed in a venting face (25) of the can (13),
- a stack of electrodes (18) enclosed in the closed internal volume (15),
- a venting membrane (40) laid across the pass-through venting window (30), a free space (42) being defined in the closed internal volume (15) behind the venting membrane (40),
**characterized in that**, it comprises at least one supporting member (50, 51) in the free space (42), the or each supporting member (50, 51) being dedicated to limiting inwards deflections of the venting membrane (40) in the free space (42).

2. Energy storage cell (10) according to claim 1, wherein the or each supporting member comprises a rib (50, 51) extending in the free space (42) along the venting membrane (40).

3. Energy storage cell (10) according to claim 1 or 2, wherein the venting face (25) comprises beams (45) extending across the pass-through venting window (30) parallel to a fixation plane of the venting membrane (40), the or each supporting member (50, 51) being linked to the ribs (42) by pillars (52), the pillars (52) extending in a plane angularly offset from the fixation plane of the venting membrane (40).

4. Energy storage cell (10) according to any one of the preceding claims, wherein the venting face (25) comprises an external layer (33) superimposed with an internal layer (36), the internal layer (36) comprises the or each supporting members (50, 51), the venting membrane (40) being fixed to the external layer (33).

5. Energy storage cell (10) according to any one of the preceding claims, wherein the energy storage cell (10) comprises at least two supporting members (50, 51), which are angularly offset from each other.

6. Energy storage cell (10) according to any one of the preceding claims, wherein the or each supporting member (50, 51) is integral with at least one part of the venting face (25).

7. Energy storage cell (10) according to any one of the preceding claims, comprising at least two lateral supporting members (51), and at least one central supporting member (51) extending between and along the lateral supporting members (51), the or each central supporting member (51) being for at least a part of its surface, further away from the fixation plane of the venting membrane (40) than the lateral supporting members (51).

8. Energy storage cell (10) according to claim 7, wherein the part of the or each central supporting member's surface being further away from the fixation plane of the venting membrane (40) than the lateral supporting members (51), is a central portion (55) of the or each central supporting member (51).

9. Energy storage cell (10) according to any one of the preceding claims, wherein the or each supporting member (50 ,51) is configured to allow gas passage from the closed internal volume (15) of the cell (10) to the venting membrane (40).

10. Energy storage cell (10) according to any one of the preceding claims, wherein the venting membrane (40) is welded around the perimeter of the pass-through venting window (30), the venting membrane (40) sealingly closing the pass-through venting window (30).

11. Energy storage cell (10) according to any one of the preceding claims, wherein the venting membrane (40) is welded on an inner face of the can (13).

12. Energy storage cell (10) according to any one of the preceding claims, wherein the venting membrane (40) is, in a normal position, laid at least in part onto the or each supporting member (50, 51).

## Amended claims

### Amended claims in accordance with Rule 137(2) EPC.

1. Energy storage cell (10) comprising:
- a parallelepipedal can (13) defining a closed internal volume (15), and comprising a pass-through venting window (30) allowing the passage of gas from the closed internal volume (15), the pass-through venting window (30) being formed in a venting face (25) of the can (13), the venting face (25) being a face of the can (13),
- a stack of electrodes (18) enclosed in the closed internal volume (15),
- a venting membrane (40) laid across the pass-through venting window (30) in a fixation plane in a normal position of the venting membrane (40), a free space (42) being defined in the closed internal volume (15) behind the venting membrane (40), the energy storage cell comprises at least one supporting member in the free space (42), the or each supporting member being dedicated to limiting inwards deflections of the venting membrane (40) in the free space (42),
**characterized in that** the or each supporting member is integral with at least one part of the venting face (25).

2. Energy storage cell (10) according to claim 1, wherein the or each supporting member comprises a rib (50, 51) extending in the free space (42) along the venting membrane (40).

3. Energy storage cell (10) according to claim 1 or 2, wherein the venting face (25) comprises beams (45) extending across the pass-through venting window (30) parallel to the fixation plane of the venting membrane (40), the or each supporting member being linked to the beams (45) by pillars (52), the pillars (52) extending in a plane angularly offset from the fixation plane of the venting membrane (40).

4. Energy storage cell (10) according to any one of the preceding claims, wherein the venting face (25) comprises an external layer (33) superimposed with an internal layer (36), the internal layer (36) comprises the or each supporting members (50, 51), the venting membrane (40) being fixed to the external layer (33).

5. Energy storage cell (10) according to any one of the preceding claims, wherein the energy storage cell (10) comprises at least two supporting members (50, 51), which are angularly offset from each other.

6. Energy storage cell (10) according to any one of the preceding claims, comprising at least two lateral supporting members (51), and at least one central supporting member (51) extending between and along the lateral supporting members (51), the or each central supporting member (51) being for at least a part of its surface, further away from the fixation plane of the venting membrane (40) than the lateral supporting members (51).

7. Energy storage cell (10) according to claim 6, wherein the part of the or each central supporting member's surface being further away from the fixation plane of the venting membrane (40) than the lateral supporting members (51), is a central portion (55) of the or each central supporting member (51).

8. Energy storage cell (10) according to any one of the preceding claims, wherein the or each supporting member is configured to allow gas passage from the closed internal volume (15) of the cell (10) to the venting membrane (40).

9. Energy storage cell (10) according to any one of the preceding claims, wherein the venting membrane (40) is welded around the perimeter of the pass-through venting window (30), the venting membrane (40) sealingly closing the pass-through venting window (30).

10. Energy storage cell (10) according to any one of the preceding claims, wherein the venting membrane (40) is welded on an inner face of the can (13).

11. Energy storage cell (10) according to any one of the preceding claims, wherein the venting membrane (40) is, in the normal position, laid at least in part onto the or each supporting member.
